# EUROPÄISCHE PATENTSCHRIFT

(11) **EP 3 061 978 B1**
(45) Veröffentlichungstag und Bekanntmachung des Hinweises auf die Patenterteilung: **20.06.2018**
(21) Anmeldenummer: 16154819.3
(22) Anmeldetag: 09.02.2016
(51) Int. Cl.: F16B 13/00, E04C 5/07, F16C 7/02, F16B 2/16

(54) **BEFESTIGUNGSELEMENT ZUM BEFESTIGEN VON ANBAUTEILEN AN EINEM MAUERWERK ODER EINEM BETONKÖRPER, EIN BEFESTIGUNGSSYSTEM, EINEN SPANNANKER UND EIN VERFAHREN ZUM BEFESTIGEN VON ANBAUTEILEN AN EINEM MAUERWERK ODER EINEM BETONKÖRPER**
FASTENING ELEMENT FOR FASTENING ATTACHMENTS TO A PIECE OF MASONRY OR A CONCRETE BODY, A FASTENING SYSTEM, A TENSIONING ANCHOR AND A METHOD FOR FASTENING ATTACHMENTS TO A PIECE OF MASONRY OR A CONCRETE BODY
ÉLEMENT DE FIXATION DESTINE A FIXER DES COMPOSANTS DE CONSTRUCTION A UN MUR OU UN CORPS EN BETON, SYSTEME DE FIXATION, ANCRE DE SERRAGE ET PROCEDE DE FIXATION DE COMPOSANTS DE CONSTRUCTION A UN MUR OU UN CORPS EN BETON

(30) Priorität: 27.02.2015 DE 102015203511
(43) Veröffentlichungstag der Anmeldung: 31.08.2016
(73) Patentinhaber: C-Con GmbH & Co. KG, 71063 Sindelfingen (DE)
(72) Erfinder: Georgii, Andreas, 71069 Sindelfingen (DE)
(74) Vertreter: DREISS Patentanwälte PartG mbB

(56) Entgegenhaltungen:
- CH-A5- 693 102
- DD-A1- 146 362
- DE-A1- 2 751 020
- DE-A1-102004 038 082

## Beschreibung

Die vorliegende Erfindung betrifft eine Befestigungsstange, die beispielsweise zum Befestigen von Anbauteilen an einer Wand, einer Decke oder einem Boden aus Mauerwerk oder Beton, nach dem Oberbegriff des Anspruchs 1 und einen Spannanker nach dem Anspruch 2. Außerdem umfasst die Erfindung ein Befestigungssystem nach dem Oberbegriff des Anspruchs 11 und ein Verfahren zum Befestigen von Anbauteilen nach dem Oberbegriff des Anspruchs 13.

Im Zusammenhang mit der Erfindung wird der Begriff "Befestigungsstange" als Oberbegriff für längliche Befestigungselemente gebraucht, die zum Beispiel in eine Bohrung in einem Bauwerk, sei es eine Wand, eine Decke ein Boden oder ein anderer Teil des Bauwerks, eingeklebt werden. Wenn die Klebverbindung zwischen Befestigungselement und Bauwerk ausgehärtet ist, kann das Befestigungselement zum Befestigen eines Anbauteils an dem Bauwerk zum Beispiel durch eine Schraubverbindung genutzt werden.

Ein "Roving" ist ein "endloser" Faden, der aus vielen Einzelfasern (Filamenten) besteht. Rovings sind die Basis vieler Werkstücke aus Faser-Verbund-Werkstoffen und werden am Markt in verschiedenen Qualitäten und Durchmessern angeboten.

Die Erfindung ist nicht auf die exemplarisch beschriebene Anwendung "Befestigen von Anbauteilen an einem Mauerwerk oder einer Betonwand" beschränkt. Eine erfindungsgemäße Befestigungsstange kann aber auch eine herkömmliche Stahlschraube oder einen Stahldübel ersetzen.

Ein "Spannanker" ist ein auf Zug beanspruchtes Stahlseil, das bei Spannbeton-Konstruktionen eingesetzt wird, um in den Beton eine Druckspannung einzuleiten. Wegen der Korrosionsanfälligkeit von Stahl ist der Aufwand zur Verhinderung von Korrosion des oder der Stahlseile über die gesamte Lebensdauer des Bauwerks erheblich.

Im Zusammenhang mit der Erfindung ist ein Spannanker eine Bauteil, das Zugkräfte zwischen zwei an den Enden angeordneten Hülsen mit Hilfe einer Vielzahl von Fasern überträgt.

Aus dem Stand der Technik sind metallische Befestigungselemente bekannt, die beispielsweise als Gewindestange oder Dübel aus Stahl ausgebildet sind. Diese Gewindestangen oder Dübel werden in ein Bohrloch eingebracht und vorzugsweise mit einem zugelassenen Spezialkleber (z.B. auf Epoxid- oder Polyesterharz-Basis) mit dem Mauerwerk oder einem Körper aus Beton verklebt. Sobald die Gewindestange oder der Dübel mit dem Bauwerk verklebt ist, kann das zu befestigende Anbauteil an einem aus dem Mauerwerk oder der Betonwand hervorragenden Teil der Gewindestange oder des Dübels angeordnet und verschraubt werden. Die Verwendung von metallischen Verbindungselementen beim Befestigen von Anbauteilen an einem Mauerwerk oder einem Körper aus Beton hat jedoch einige Nachteile, wie zum Beispiel Korrosion und Wärmebrücken.

Aus der DE 10 2004 038 082 A1 und der DD 146 362 sind faserverstärkte Zugstangen bekannt. Bei diesen Zugstangen wird die Kraftübertragung von der Zugstange zu einer Hülse aus Metall durch Klemmen der Fasern zwischen einem konischen Abschnitt der Hülse und einem Spreizkörper erreicht. Diese Art der "Einspannung" der Fasern führt dazu, dass viele der Fasern gequetscht werden und sie dadurch brechen, weil die enormen Zugfestigkeiten von hochfesten duroplastischen Fasern immer mit sehr niedrigen Druckfestigkeiten und Scherfestigkeiten verbunden sind. Als Faustformel kann man sagen, dass bei Fasern die Druckfestigkeit nur etwa 10% der Zugfestigkeit beträgt.

Aus der CH 693 102 A5 ist eine Verankerung für Kohlenstofffaserverbunddrähte bekannt, die sich dadurch auszeichnet, dass "der an seinem in der Ankerhülse 5 zu befestigende oder befestigte Teil in mindestens einem Bereich 4 aufgetrennt und in diesem aufgetrennten Bereich permanent gespreizt ist.

Aus der DE 27 51 020 (D3) ist ein Bodenanker bekannt, bei der ein Bewehrungsstab aus Metall in einer Hülse mit einer zumindest teilweise konischen Innenwand verkeilt wird, indem der Zwischenraum zwischen dem Bewehrungsstab und dem konischen Teil der Hülse mit Kugeln oder einem stückigen Füllgut ausgefüllt wird.

Der Erfindung liegt die Aufgabe zu Grunde, eine Verbindung von Fasern und Hülsen bereitzustellen, welche diese Nachteile nicht aufweist und hinsichtlich Zugbeanspruchung und Sicherheit gegen Versagen gegenüber dem Stand der Technik verbessert ist.

Diese Aufgabe wird erfindungsgemäß bei einer Befestigungsstange oder einem Spannanker, wobei die Befestigungsstange aus einem endlosfaserverstärkten Verbundwerkstoff besteht und an mindestens einem Ende der Befestigungsstange eine Hülse mit der Befestigungsstange formschlüssig verbunden ist, dadurch gelöst, dass die Befestigungsstange von einer Vielzahl von Fasersträngen gebildet wird, dass jeder Faserstrang aus einem oder mehreren Rovings besteht, dass jeder Roving an einem Ende des Faserstrangs um eine oder mehrere Kugeln oder Körner aus einem druckfesten Material geschlungen oder gelegt ist, dass die Hülse eine mindestens bereichsweise konische Bohrung aufweist, und dass die von den Fasersträngen umschlungenen Kugeln oder Körner in dem konischen Teil der Bohrung verkeilt sind.

Ein erfindungsgemäßer Spannanker ist - vereinfacht ausgedrückt - nichts anderes als eine Zugstange an deren beiden Enden eine Hülse vorgesehen ist. Natürlich haben Spannanker, die zum Beispiel eine Betonbrücke vorspannen, größere Querschnitte und größere Längen als eine erfindungsgemäße Zugstange, die an der Fassade eines Gebäudes montiert wird.

Nachfolgend wird zur sprachlichen Vereinfachung zuweilen nur von Kugeln gesprochen. Umfasst sind immer auch Körner oder Gemische von Kugeln und Körnern.

Bei der erfindungsgemäßen Befestigungsstange wird der konische Abschnitt der Bohrung von den harten Kugeln oder Körnern teilweise ausgefüllt, so dass sich die Kugeln oder Körner gegeneinander und gegen die schräge Wandung der konischen Bohrung direkt abstützen. Direkt bedeutet, dass die Kugeln sich untereinander berühren, aber auch die Wandung der Bohrung berühren. Bei dem erfindungsgemäßen Verkeilen der Kugeln und/oder Körner in dem konischen Teil der Bohrung haben die Fasern beziehungsweise die Rovings keine Funktion. Es kommt dabei vor allem auf die Härte/Druckfestigkeit der Kugeln und/oder Körner an.

Weil jedoch bei dem Verkeilen zwischen den Kugeln und/oder Körnern ausreichend Zwischenräume bestehen bleiben, können die zuvor um die Kugeln geschlungenen Rovings ohne Quetschungen die Zwischenräume zwischen den dicht gepackten Kugeln ausfüllen und an einem Ende aus der Hülse herausgeführt werden.

Dies bedeutet, dass die Rovings beziehungsweise die Fasern der Rovings keinen Quetschungen ausgesetzt sind. Vielmehr werden sie ohne zu knicken um die Kugeln herumgeschlungen. In anderen Worten: Die Rovings beziehungsweise die Faserstränge werden ausschließlich auf Zug beansprucht. Ein Quetschen oder Knicken der Fasern findet nicht beziehungsweise nur in sehr geringem Umfang statt. Dadurch hat die Verbindung zwischen den Fasersträngen und der Hülse eine sehr hohe Belastbarkeit.

Die erfindungsgemäße Befestigungsstange ist, wie andere Dübel oder Gewindestangen auch, vorwiegend geeignet, um Zugkräfte zu übertragen. Wenn nun zwischen der Hülse und den Fasersträngen der Befestigungsstange Zugkräfte übertragen werden, werden die einzelnen Rovings der Faserstränge, die ja jeweils um eine oder mehrere der Kugeln oder Körner geschlungen sind, ausschließlich auf Zug beansprucht. Dies gilt auch in dem "Umlenkbereich" in dem die Rovings so um eine oder mehrere Kugeln geschlungen werden, dass die Rovings eine Richtungsänderung von 180° erfahren. Im Ergebnis findet dadurch eine den spezifischen Eigenschaften der Fasern optimal entsprechende Umlenkung statt, so dass die hohe Leistungsfähigkeit der Fasern auch voll ausgenutzt werden kann.

In vorteilhafter Ausgestaltung der Erfindung ist vorgesehen, dass der Durchmesser, der zum Verkeilen in dem konischen Teil der Bohrung eingesetzten Kugeln oder Körner mindestens dreimal größer als der Durchmesser der Rovings ist. Bevorzugt ist der Durchmesser jedoch mindestens fünfmal größer als der Durchmesser der Rovings. Der Durchmesser der Kugeln bestimmt den Krümmungsradius der Rovings beim Umschlingen der mindestens einen Kugel oder des mindestens einen Korns. Somit ist es auf einfache Weise möglich, sicherzustellen, dass die Fasern dabei nicht geknickt werden. In anderen Worten: Keine der Fasern bricht beim Umschlingen der Kugeln bzw. der Körner. Je größer die Kugeln bzw. die Körner desto geringer ist die Gefahr, dass einzelnen Fasern beim Umschlingen der Kugeln / der Körner brechen.

In der Regel ist es vorteilhaft, dass mehrere Kugeln oder Körner von einem Filament umschlungen werden. Außerdem ist es vorteilhaft, wenn nicht alle Kugeln oder Körner den gleichen Durchmesser haben, sondern wenn Kugeln/Körner unterschiedlichen Durchmessers eingesetzt werden. Dann kann die Packungsdichte in dem konischen Bereich der Bohrung erhöht werden. Infolgedessen findet eine nochmals verbesserte Verkeilung der Kugeln und Körner in dem konischen Teil der Bohrung der Hülse statt.

Es hat sich als vorteilhaft erwiesen, wenn die Kugeln aus Glas, Keramik oder Metall sind. Glas- oder Keramikkugeln sind besonders bevorzugt, weil sie erstens extrem hart und druckfest sind und zweitens sie auch sehr kostengünstig herstellbar sind. Außerdem sind sie korrosionsbeständig. Außerdem haben sich Sandkörner, bevorzugt aus Quarzsand, als besonders geeignet erwiesen. Ganz besonders geeignet sind Körner aus Quarzsand mit einer Sieblinie von 0 - 2 mm.

Die Filamente aus denen die Faserstränge gebildet werden können Fasern aus Basalt, Glas oder Kohlenstoff enthalten. Diese Aufzählung ist nicht abschließend, sondern es können alle handelsüblichen Fasern eingesetzt werden.

Es hat sich bei praktischen Versuchen als vorteilhaft erwiesen, wenn die Filamente einen Durchmesser von mehr als 10 µm, bevorzugt zwischen 13 µm und 20 µm haben.

Um sicherzustellen, dass die Kugeln oder Körner, nachdem sie von den Rovings umschlungen wurden, nicht "verloren" gehen, ist vorgesehen, dass die Faserstränge mit den Kugeln, den Körnern und/oder untereinander durch ein Harz oder ein anorganisches Material miteinander verklebt beziehungsweise verbunden sind.

Diese Klebung hat auf die Zugfestigkeit der erfindungsgemäßen Befestigungsstange nahezu keinen Einfluss. Die Kraftübertragung erfolgt, wie bereits erwähnt, in einem ersten Schritt von den Rovings auf die Kugeln, um die sie geschlungen sind, statt. In einem zweiten Schritt übertragen die in der konischen Bohrung verkeilten Kugeln die Zugkräfte auf die Hülse.

Die Hülse hat in vorteilhafter Ausgestaltung ein Außengewinde und/oder ein Innengewinde. Dann ist es möglich, diese Hülse zusammen mit herkömmlichen Muttern oder Metallschrauben einzusetzen.

Es hat sich als vorteilhaft erwiesen, wenn die Befestigungsstangen an dem der Hülse abgewandten Ende mindestens eine Nut und/oder einen aufgerauten Bereich aufweist. Dann nämlich ist eine noch sichere und wirkungsvollere Verankerung der Befestigungsstange beispielsweise in einem Bauteil aus Beton möglich.

Die erfindungsgemäße Befestigungsstange mit ihren vielen Fasersträngen kann aus bevorzug mit Endlosfasern verstärkten Verbundwerkstoff hergestellt werden. Endlosfaserverstärkte Verbundwerkstoffe bestehen aus einer Matrix und "endlosen" Fasern (z. B. Basaltfasern, Glasfasern, Kohlefasern, ...) die miteinander kombiniert werden.

Besonders bevorzugt wird ein endlosfaserverstärkter Verbund bestehend aus einer keramischen oder betonähnlichen Matrix, die sehr feinkörnig ist und spezielle Additive hat, die nicht alkalisch auf die Fasern wirken.

Außer der genannten erhöhten Temperaturbeständigkeit des erfindungsgenmäßen Befestigungselements, weist es eine wesentlich höhere Zugfestigkeit als Edelstahl auf. So hat ein Standard-Bolzenanker Typ FAZ II 12 eine maximale Zugfestigkeit im Versagensfall von 545 MPa.

Einfache Glasfasern (S-Glas) haben Zugfestigkeiten von 4826-5081 MPa, bei einem Faseranteil von 50% hat eine so gefertigte Befestigungsstange rechnerisch eine Zugfestigkeit 2413-2540 MPa. Damit haben schon einfache Glasfasern in einer geeigneten Matrix mehr als die 4,5-fache Zugfestigkeit von Stahl.
Mit Epoxidharz getränkte Basaltfasern haben eine gemessene Zugfestigkeit von mehr als 3.000MPa und damit die 5-6 fache Zugfestigkeit von Stahl.

Handelsübliche Carbonfasern erreichen Zugfestigkeiten bis 8000 MPa. Die vorgeschlagenen keramischen Kugeln besitzen Druckfestigkeiten bis zu 5000 MPa. Stahl hat nur eine Druckfestigkeit von 250 bis 1200 MPa.

Die beanspruchten endlosfaserverstärkten Verbundwerkstoffe können mechanisch hoch beansprucht werden, insbesondere auf Zug. Ihr Elastizitätsmodul ist je nach verwendetem Fasermaterial niedriger als bei Stahl (Glasfasern, Basaltfasern) beziehungsweise ähnlich hoch oder höher als der von Stahl (Carbonfasern) und sie weisen ein ausgezeichnetes Korrosionsverhalten auf, auch in sehr aggressiver Umgebung.

Weitere Vorteile der vorgeschlagenen anorganischen Verbundwerkstoffe sind eine höhere Druckfestigkeit und eine höhere Abriebfestigkeit im Vergleich zu herkömmlichen Harzen. Außerdem beträgt die niedrige Wärmeleitfähigkeit der erfindungsgemäßen Befestigungsstange bei Verwendung von Keramik oder einer betonähnlichen Matrix nur etwa 1/20 der Wärmeleitfähigkeit von Edelstahl. Das führt dazu, dass keine Kältebrücken auftreten.

Schließlich verhindert der endlosfaserverstärkte Verbundwerkstoff Korrosionsprobleme im Mauerwerk oder in dem Betonkörper im Bereich der Befestigungsstangen. Dies ist ein weiterer wichtiger Vorteil erfindungsgemäßer Spannanker.

Durch die hohe Zugfestigkeit des endlosfaserverstärkten Verbundwerkstoffs können die Bohrlöcher im Mauerwerk oder in dem Betonkörper mit kleinerem Durchmesser ausgeführt werden, als mit herkömmlichen metallischen Befestigungsstangen. Auch sind dadurch kürzere Bohrlöcher möglich. Beides führt zu erheblichen Kosteneinsparungen bei der Montage. Die erfindungsgemäßen Spannanker sind wesentlich leichter als herkömmliche Spannanker, die aus Stahlseilen bestehen. Dadurch erhöht sich die Belastbarkeit der Brücke.

Die Befestigungsstangen werden in ein Bohrloch des Mauerwerks oder dem Betonkörper eingebracht und vorzugsweise mit einem Spezialkleber im Mauerwerk oder in dem Betonkörper aus herkömmlichen Epoxid- oder Polyesterharzen, oder durch Verwendung von betonähnlichen Emulsionen oder Emulsionen auf Basis von Keramik verklebt.

Besonders vorteilhaft ist es, wenn ein Ein-Komponenten-Klebesystem eingesetzt wird, das unter der Einwirkung von UV-Licht oder Licht anderer Wellenlänge aushärtet. Dann nämlich kann die gute Lichtleitfähigkeit von Glasfasern ausgenutzt werden, um den Kleber rasch und prozesssicher auszuhärten. Wenn ein Ein-Komponenten-Klebesystem in das Bohrloch injiziert wird, anschließend eine Faserstange aus Glasfasern eingeführt wird, und dann von außen UV-Licht durch die Glasfasern in das Bohrloch geleitet werden, kann der Kleber innerhalb von Sekunden aushärten. In diesem Fall sollten als druckaufnehmende Komponente Glaskugeln oder Körner aus Quarzsand eingesetzt werden.

Ein weiterer Vorteil der erfindungsgemäßen Befestigungsstange aus einem Verbundwerkstoff ist, dass im Falle einer fehlerhaften Montage, zum Beispiel wenn der Kleber zu früh aushärtet, diese relativ leicht ausgebohrt werden kann. Bei einer Befestigungsstange aus Metall ist es nicht möglich diese wieder auszubohren.

Außerdem ist vorgesehen, dass die Hülse ein Gewinde, bevorzugt ein Außengewinde zum Befestigen einer Gewindemutter, aufweist. Über diese Schraubverbindung kann das Anbauteil mit der Befestigungsstange an dem Mauerwerk befestigt werden. Vorzugsweise ist zwischen dem Befestigungsteil und der Gewindemutter eine Unterlegplatte bzw. Unterlegscheibe vorgesehen, um eine bessere Kraftverteilung zu erreichen. Dabei kann die Unterlegplatte bzw. Unterlegscheibe Teil der Gewindehülse sein. Durch eine entsprechende Oberflächenstruktur ("Zähne") der an der Gewindehülse starr befestigten Unterlagscheibe in Richtung des Mauerwerks bzw. Betonkörpers kann die Gewindehülse und damit auch die Faserstange gegen Verdrehen gesichert werden.

Ergänzend hierzu kann vorgesehen sein, dass die Hülse länger ist, als die Dicke des Befestigungselements des Anbauteils, so dass die Gewindehülse teilweise in das Mauerwerk oder die Betonwand eindringt. Dadurch können vorteilhafterweise Schub- oder Scherkräfte von der Gewindehülse abgefangen werden, da die Gewindehülse und die Befestigungsstange zusammen die Scherkraft tragen. Außerdem ergibt sich eine größere
Klebefläche zwischen der Gewindehülse und der Befestigungsstange. Wenn der Teil der Gewindehülse der in das Mauerwerk eindringt konisch ausgeführt wird, dann kann ein Herausrutschen der Faserstange während des Härtens des Klebers verhindert werden. Außerdem wird ein Heraustropfen des Klebers verhindert und die Befestigungsstange wird an dieser Stelle im Bohrloch zentriert. Durch das wesentlich niedrigere Gewicht einer beispielsweise 8 mm dicken Faserstange mit einem spezifischen Gewicht von ca. 1,7 kg/dm³ im Vergleich zu einer vor allem hinsichtlich der Belastbarkeit vergleichbaren 12 mm dicken Stange aus Stahl mit einem spezifischen Gewicht von ca. 8 kg/dm³ verringert sich die Gefahr deutlich, dass die Faserstange aus dem Bohrloch herausrutscht während der Kleber aushärtet.

Eine besonders leistungsfähige Konstruktion ergibt sich, wenn die Befestigungsstange den ihr zur Verfügung stehenden Raum beinahe vollständig ausfüllt. So ist in einer weiteren Ausführungsform vorgesehen, dass die Befestigungsstange zumindest teilweise rohrförmig ausgebildet ist, und die Gewindehülse im Innern des rohrförmig ausgebildeten Teils der Befestigungsstange verklebt ist, wobei die Gewindehülse ein Innengewinde aufweist. Das Anbauteil wird anschließend mit einer Schraube, die mit dem Innengewinde der Gewindehülse zusammenwirkt, befestigt. Vorzugsweise ist zwischen dem Befestigungsteil und der Schraube eine Unterlegplatte bzw. Unterlegscheibe vorgesehen. Dabei kann die Unterlegplatte bzw. Unterlegscheibe Teil der Gewindehülse sein.

Ferner ist vorgesehen, dass die Befestigungsstange an dem Ende das in das Bohrloch versenkt wird so geformt ist, dass die Stange nicht nur kraftschlüssig durch den Kleber im Bohrloch fixiert ist, sondern durch eine spezielle Formgebung einen Formschluss mit dem Kleber hergestellt wird. Dies kann im einfachsten Fall durch Aufrauen erzielt werden. Es hat sich gezeigt, dass durch gröbere Strukturen als die die durch Aufrauen erzielt werden können, wesentlich höhere Ausreißwerte erreicht werden. Diese gröberen Strukturen können durch abtragende Verfahren wie das Einfräsen von ungefähr quer zur Längsachse der Stange angeordneten Vertiefungen, durch Aufbringen von z.B. Hülsen mit Oberflächenstrukturen mit widerhakenähnlichen Formen, oder durch Formgebung der Faserstange als solches durch unterschiedliche Querschnitte im Verlauf der Faserstange erzielt werden.

In einem erfindungsgemäßen Verfahren soll ein erfindungsgemäßes Befestigungssystem dazu verwendet werden, Anbauteile am Mauerwerk oder an dem Betonkörper zu befestigen. Dazu umfasst das Befestigungssystem die erfindungsgemäße Befestigungsstange aus einem endlosfaserverstärktem Verbundwerkstoff, welcher neben den Endlosfasern entweder herkömmliche Kunstharze oder eine anorganischen Matrix aus einer betonähnlichen Substanz oder unter Verwendung von Keramik als Matrix besteht, sowie die an der Befestigungsstange angeordnete Gewindehülse und eine Gewindemutter oder eine Schraube, je nach der Ausgestaltung der Gewindemutter.

Bei dem erfindungsgemäßen Verfahren ist optional vorgesehen, dass das Bohrloch zumindest teilweise mit einem druckfesten Material, vorzugsweise mit Beton oder Zement, ummantelt wird. Vorzugsweise wird die Befestigungsstange in einem Übergangsbereich zwischen dem Anbauteil und dem Mauerwerk oder der Betonwand ummantelt. Dabei kann die Ummantelung aus dem druckfesten Material aus dem Bohrloch in das Anbauteil hineinragen. Durch diese Maßnahme kann eine Kältebrücke verhindert werden und die auf die Klebung wirkende Scherkraft wird reduziert.

Ausführungsbeispiele der Erfindung sind in den Figuren dargestellt und werden in der nachfolgenden Beschreibung näher erläutert. Es zeigen, jeweils in schematischer Form:
Figur 1 ein Befestigungssystem zum Befestigen von Anbauteilen an einem Mauerwerk oder einer Betonwand in einer Schnittdarstellung in einer ersten Ausführungsform;
Figur 2 das Befestigungssystem aus Figur 1 in einer zweiten Ausführungsform;
Figur 3 das Befestigungssystem aus Figur 1 in einer dritten Ausführungsform;
Figur 4 eine schematische Darstellung einer erfindungsgemäßen Hülse;
Figur 5 eine schematische Darstellung einer mit kugelförmigen Klemmkörpern gefüllten erfindungsgemäßen Hülse;
Figur 6 eine schematische Darstellung einer mit erfindungsgemäßen Fasersträngen ausgefüllten erfindungsgemäßen Hülse;
Figuren 7 bis 9 stark vereinfacht die Herstellung erfindungsgemäßer Faser-Stränge;
Figur 10 stark vereinfacht eine erfindungsgemäße Befestigungsstange kurz vor der Fertigstellung;
Figur 11 stark vereinfacht eine fertiggestellte erfindungsgemäße Befestigungsstange;
Figur 12 ein normiertes Kraft-Weg-Diagramm einer erfindungsgemäßen Befestigungsstange und eines erfindungsgemäßen Spannankers und
Figur 13 ein Ausführungsbeispiel eines erfindungsgemäßen Spannankers.

### Beschreibung der Ausführungsbeispiele

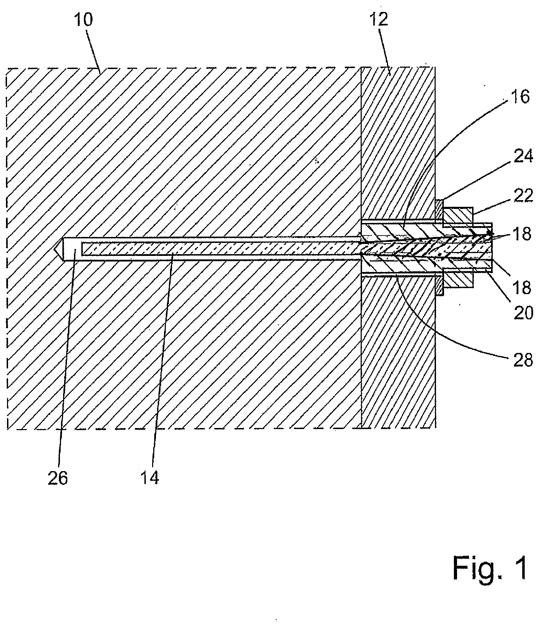

Figur 1 zeigt vereinfacht ein Mauerwerk oder einen Betonkörper 10, an dem ein Anbauteil 12 mit Hilfe einer Befestigungsstange 14 befestigt werden soll. Es ist klar, dass die erfindungsgemäße Befestigungsstange 14 auch vertikal an einer Decke oder einem Boden eines Bauwerks befestigt werden kann. Das Bezugszeichen 10 steht stellvertretend für jedes Bauteil eines Bauwerks an dem ein Anbauteil befestigt werden soll.

Die Befestigungsstange 14 weist vorzugsweise einen runden oder polygonalen Querschnitt auf und ist aus einem faserverstärkten Verbundwerkstoff hergestellt. Als Matrix kann ein anorganisches Material, wie z.B. eine betonähnliche Matrix, eine Keramik, oder ein herkömmliches Harz mit oder ohne Zuschlagstoffe verwendet werden. Es können verschiedene handelsübliche Fasern eingesetzt werden, wobei die Auswahl der eingesetzten Fasern, von dem Anforderungsprofil, aber auch den Materialkosten abhängt.

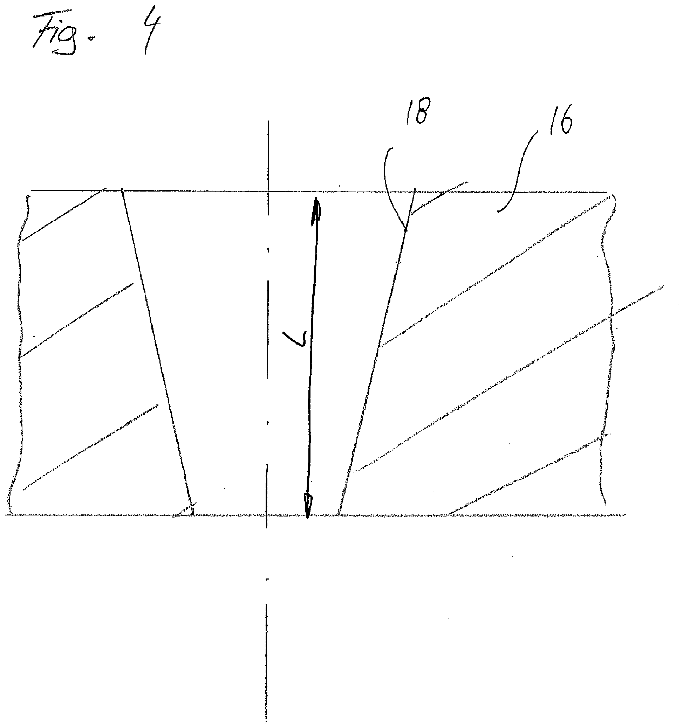

Auf der Befestigungsstange 14 ist an einem freien Ende eine (Gewinde-)Hülse 16 aus Metall, häufig Edelstahl, angeordnet. Die Gewindehülse 16 weist eine (Durchgangs)Bohrung auf, die zumindest bereichsweise konisch ist. Details zeigen die Figuren 4 ff und deren Beschreibung.

Die Hülse 16 und die Befestigungsstange 14 sind formschlüssig miteinander verbunden; sie können zusätzlich miteinander verklebt werden. Die Verbindung von Hülse 16 und Befestigungsstange 14 erfolgt in der Regel nicht auf der Baustelle, sondern beim Hersteller. Die Hülse 16 hat eine konische Durchgangsbohrung 18. An dem in Figur 1 rechten Ende der Hülse 16 ist der Durchmesser der Durchgangsbohrung 18 größer als an dem linken Ende. Die Befestigungsstange 14 ist in dieser Bohrung 18 erfindungsgemäß verkeilt. Details dazu werden weiter unten im Zusammenhang mit den Figuren 4 ff illustriert und erläutert.

Die Hülse 16 weist ein Außengewinde 20 auf, das mit einer Gewindemutter 22 zusammenwirken kann. Außerdem ist an der Gewindehülse 16 eine Flanschplatte 24 zur Lastverteilung integriert. Diese Funktion kann auch von einer Unterlegscheibe (nicht dargestellt) übernommen werden.

Die Befestigungsstange 14 mit der Hülse 16 und die Mutter 22 stellen ein Befestigungssystem in einer ersten Ausführungsform dar, das erfindungsgemäß zum Befestigen des Anbauteils 12 an dem Mauerwerk oder der Betonwand 10 eingesetzt wird.

Ein Montage-Verfahren umfasst dabei folgende Verfahrensschritte:
- Bohren eines Bohrlochs 26 in das Mauerwerk oder die Betonwand 10;
- Einfüllen einer ausreichenden Menge eines geeigneten Klebstoffs;
- Einsetzen der erfindungsgemäßen Befestigungsstange 14 in das Durchgangsloch 28 des Anbauteils 12 und das Bohrloch 26 in der Mauer 12 und anschließendes Verkleben der Befestigungsstange 14 im Bohrloch 26;
- Verschrauben des Anbauteils 12 mit Hilfe der Mutter 22 mit dem Außengewinde 20 der Hülse 16.

Das erfindungsgemäße Befestigungssystem erzeugt keine Korrosionsprobleme und stellt wegen der geringen Wärmeleitfähigkeit der Befestigungsstange keine Wärmebrücke dar. Bei Verwendung einer anorganischen Matrix aus einem betonähnlichen Material oder aus Keramik ist dieses Verbindungselement wesentlich robuster gegenüber hohen Temperaturen durch z.B. Feuer als Stahl. Eine zusätzliche Verwendung der oben genannten Substanzen als Klebstoff, um die Faserstange einzukleben erhöht die Brandfestigkeit des Gesamtsystems von bisher ca. 80-120 Grad C auf über 1000 Grad C!

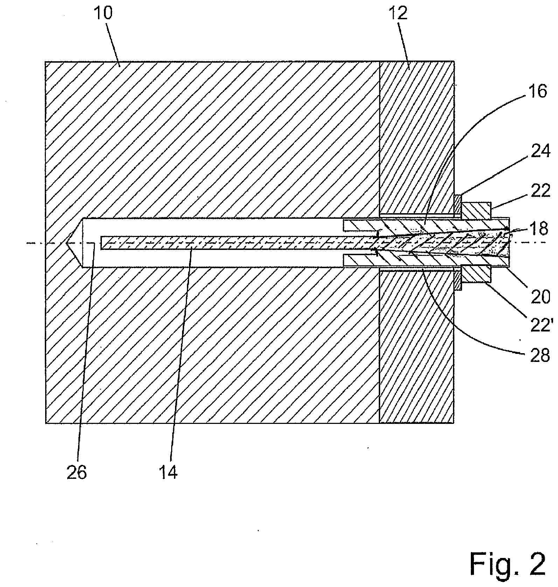

Figur 2 zeigt das erfindungsgemäße Befestigungssystem in einer zweiten Ausführungsform. Im Unterschied zur ersten Ausführungsform ist die Hülse 16 so lang, dass sie in das Bohrloch 26 zumindest teilweise hineinragt. Dies bedingt, dass die Querschnitte des Bohrlochs 26 und der Durchgangsbohrung 28 des Anbauteils 12 nahezu identisch groß sind. Durch diese Ausgestaltung können auftretende Scherkräfte oder Torsionskräfte zumindest teilweise von der Gewindehülse 16 direkt in das Mauerwerk 10 eingeleitet werden. Dadurch wird die auf die Befestigungsstange 14 wirkende Scherkraft reduziert.

Schließlich können das Bohrloch 26 und die Durchgangsbohrung 28 mit einem Bohrer in einem Schritt hergestellt werden.

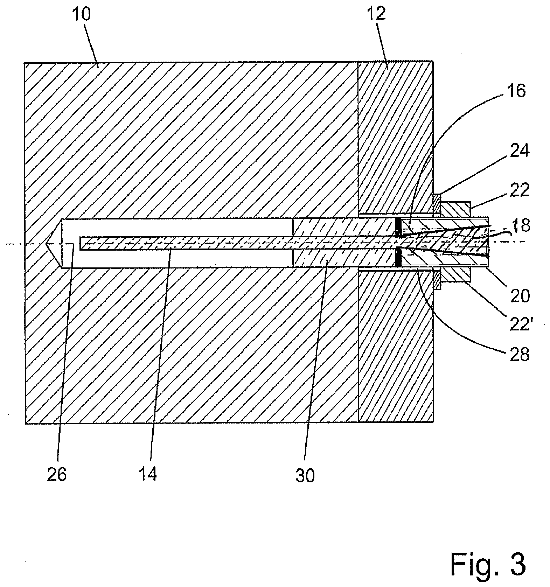

Figur 3 zeigt das erfindungsgemäße Befestigungssystem in einer dritten Ausführungsform. Hierbei ragt die Hülse 16 nur zu einem Teil in die Durchgangsbohrung 28 hinein. Der restliche Teil der Durchgangsbohrung 28 und ein Teil des Bohrlochs 26 im Mauerwerk oder in der Betonwand 10 ist bei eingesetzter Befestigungsstange 14 mit einem druckfesten Material 30, wie z.B. Zement oder Beton, ausgefüllt.

Vorzugsweise wird die Befestigungsstange 14 in einem Übergangsbereich zwischen dem Anbauteil 12 und dem Mauerwerk oder der Betonwand 10 mit einem schlecht wärmeleitenden
Material ummantelt. Durch diese Maßnahme kann eine Kältebrücke vermieden werden.

Nachdem in den Figuren 1 bis 3 das Befestigungssystem umfassend die Befestigungsstange 14 mit der Hülse 16, das Mauerwerk 10 sowie ein Anbauteil 12 in verschiedenen Ausführungsbeispielen dargestellt wurde, wird nun anhand der Figuren 4 ff der erfindungsgemäße Kraftübertragung zwischen der eigentlichen Befestigungsstange 14 und der erfindungsgemäßen Hülse 16 in mehreren Schritten erläutert.

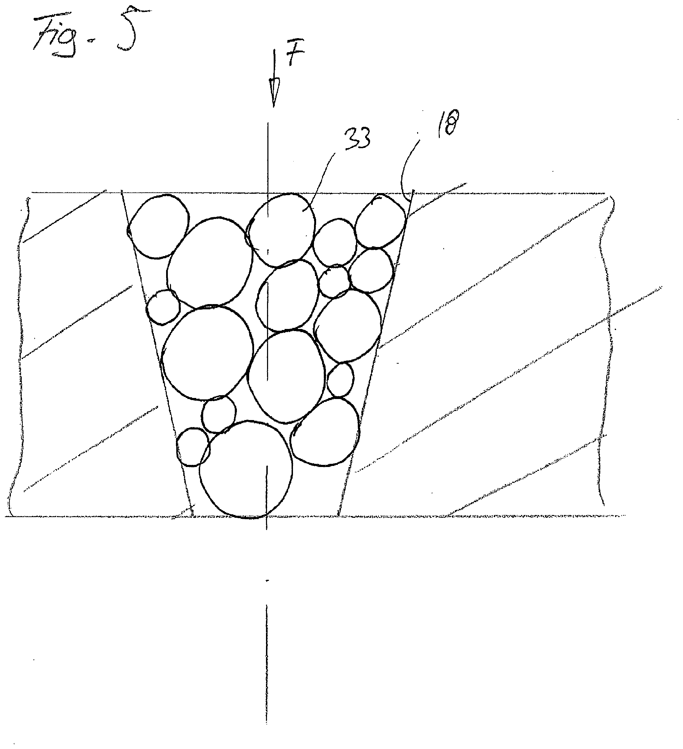

Zunächst ist eine stark schematisierte und vereinfacht dargestellte Hülse 16 in der Figur 4 geschnitten dargestellt. Im Zusammenhang mit der Erfindung ist von besonderer Bedeutung, dass die Bohrung 18 zumindest bereichsweise konisch ausgebildet ist. Durchmesser, Länge L und Kegelwinkel des konischen Abschnitts der Bohrung 18 sind so zu wählen, dass es möglich ist, eine Vielzahl von Kugeln in der Bohrung 18 zu verkeilen. Diese Situation ist ebenfalls wieder stark schematisiert in der Figur 5 dargestellt. Die Kugeln 33 haben verschiedene Durchmesser und füllen den Raum innerhalb der Bohrung 18 mehr oder weniger aus. Nicht alle Kugeln 33 sind mit Bezugszeichen versehen worden. Dabei ist von besonderer Bedeutung, dass die Kugeln 33 direkten Kontakt miteinander haben und ein Teil der Kugeln 33 direkt an der Bohrung 18 aufliegt.

Weil die Bohrung 18 zumindest bereichsweise konisch ist, verkeilen sich die Kugeln 33 in der Bohrung 18. Wenn man nun eine Kraft F der Figur 5 von oben nach unten auf die Kugeln 33 wirken lässt, dann fallen die Kugeln 33 nicht nach unten aus der Bohrung 18 heraus, sondern sie verkeilen sich zunehmend fester in dem konischen Teil der Bohrung 18.

Die Kugeln 33 füllen die Bohrung 18 nicht vollständig aus. Es werden etwas mehr als 50 % des Volumens der Bohrung 18 von den Kugeln 33 ausgefüllt. In anderen Worten: Etwa 48 % des Volumens bleiben als miteinander verbundene Hohlräume übrig. Platz genug, um Rovings oder Faserstränge der erfindungsgemäßen Befestigungsstange 14 geschützt und ohne Quetschen aufzunehmen. In dem Faserstrang nehmen die Fasern außerhalb der Hülse mehr als 50% des Volumens ein.

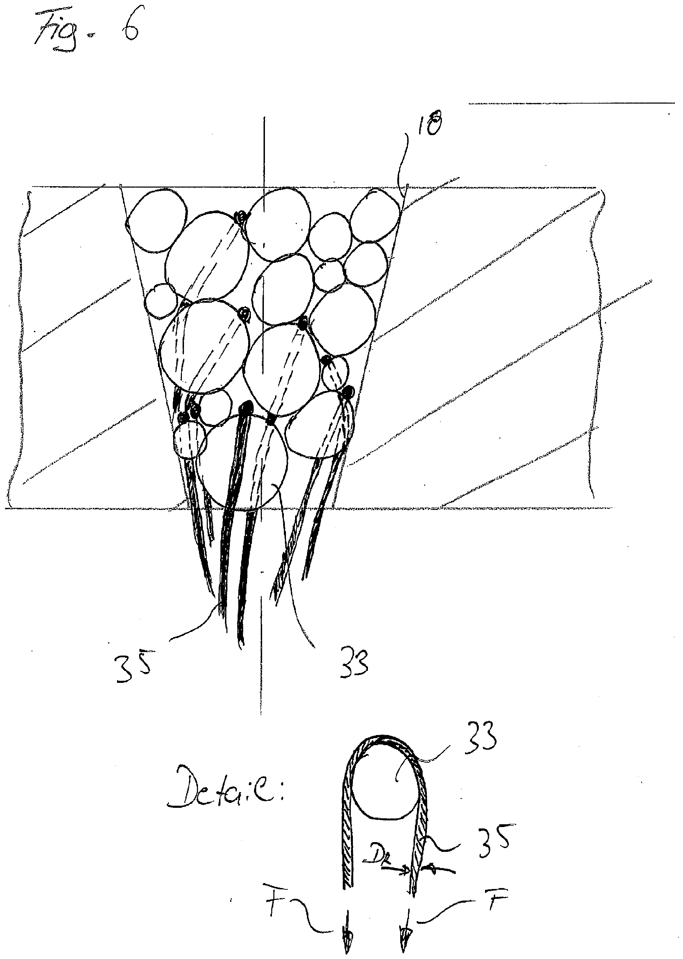

Dies macht sich die Erfindung zu nutze. Wenn man um jede der Kugeln 33 ein Filament legt, dann ergibt sich in erster Näherung, das in Figur 6 dargestellte Bild. Dabei wird unterstellt, dass jeder Roving mit einem Umschlingungswinkel von etwa 180° umschlingt. Diese Situation ist in dem Detail am unteren Ende der Figur 6 exemplarisch dargestellt. Anhand dieser Detaildarstellung ist gut zu sehen, dass eine Kugel 33 von einem Roving 35 umschlungen wird, wobei der Umschlingungswinkel etwa 180° beträgt. Ein in dieser Weise um 180° umgelenkter Roving 35 mit seinen zwei "Enden" wird im Zusammenhang mit der Erfindung auch als Faserstrang bezeichnet.

Aus Gründen der Übersichtlichkeit sind nicht bei allen Kugeln 33 der Figur 6 die Rovings 35 eingezeichnet. Es sind nur exemplarisch einige eingezeichnet. Weil sich zwischen den Kugeln 33 eine Vielzahl von Lücken und Hohlräumen vorhanden ist, findet sich für jeden der Rovings 35 ein Weg an den in der Bohrung 18 vorhandenen Kugeln 33 vorbei bis die Rovings 35 unten aus der Bohrung 18 herausgelangen.

Wenn die erfindungsgemäße Befestigungsstange 14 mit einer Zugkraft (in Figur 6 nach unten) beaufschlagt wird, dann wirkt auf jeden Roving 35 eine reine Zugbeanspruchung, die in dem Detail am unteren Ende der Figur 6 durch Pfeile F angedeutet ist.

Weil der Durchmesser der Kugeln 33 deutlich größer ist als der Durchmesser D_{R} der Rovings 35 werden die Rovings 35 bei der Richtungsänderung durch das Umschlingen der Kugel 33 nicht geknickt, sondern lediglich gebogen. Dadurch verlieren sie nichts von ihrer sehr hohen Zugfestigkeit und es findet eine ideale Übertragung der Zugkraft F von den Rovings 35 auf die Kugeln 33 statt.

Die Kugeln 33 wiederum stehen, wie in Zusammenhang mit der Figur 5 erläutert, untereinander im direkten Kontakt und sind in der Bohrung 18 verkeilt.

Die erfindungsgemäße Kraftübertragung von den Rovings 35 auf die Hülse 16 erfolgt also in zwei Schritten, wobei jeder dieser Schritte optimal für das jeweils eingesetzte Material gestaltet ist.

Schritt 1: Die Rovings 35 sind um die Kugeln 33 geschlungen, ohne dabei zu brechen, und werden ausschließlich mit Zugkräften beaufschlagt. Die Kugeln 33, die aus einem harten und druckbeständigem Material bestehen, können die von den Rovings 35 eingeleiteten Kräfte an ihrer Oberfläche gut aufnehmen, wie unmittelbar aus dem Detail der Figur 6 ersichtlich ist.

In einem zweiten Schritt übertragen die Kugeln 33 durch direkten Kontakt mit den benachbarten Kugeln 33 beziehungsweise dem konischen Abschnitt der Bohrung 18 die von den Rovings 35 eingeleiteten Kräfte auf die Hülse 16.

Um sicherzustellen, dass die Kugeln 33 an ihrer Position bleiben und auch die Rovings 35 beziehungsweise die Faserstränge nicht "verrutschen", kann der verbleibende Hohlraum in dem konischen Teil der Bohrung mit einem Harz getränkt werden. Dieses Harz hat jedoch keine Funktion im Sinne einer Kraftübertragung.

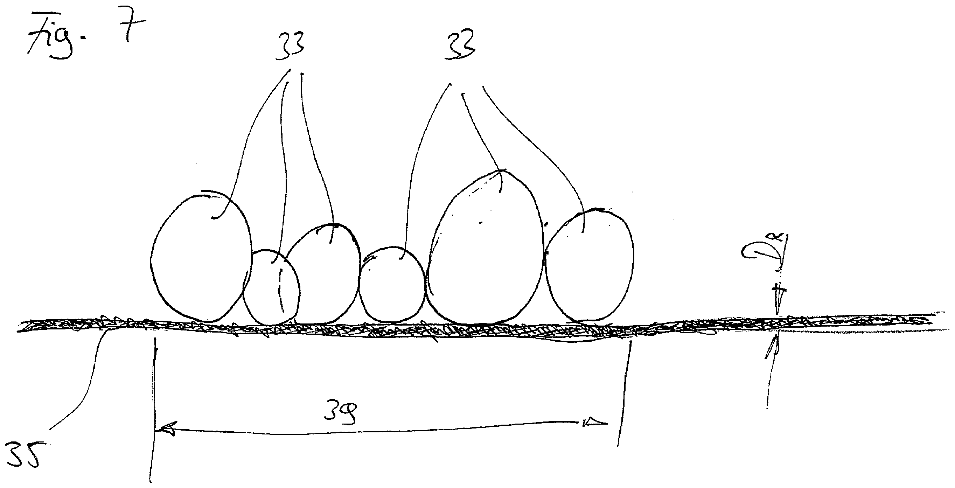

Nachdem anhand der Figuren 4 bis 6 das erfindungsgemäße Prinzip stark vereinfacht und schematisch dargestellt wurde, wird nun anhand der Figuren 7 bis 10 eine praktische Umsetzung des erfindungsgemäßen Prinzips anhand von vereinfachten Darstellungen erläutert.

Ausgehend von einem Roving 35, der mit Harz oder einem anderen Klebstoff getränkt sein kann, werden in einem Abschnitt 39 eine Vielzahl von Kugeln 33 mit gleichem oder unterschiedlichem Durchmesser auf das Roving gestreut. Wichtig ist dabei, dass der Durchmesser der Kugeln 33 deutlich größer ist als die Dicke D des Rovings 35. Weil der Roving 35 mit Harz oder einem anderen Klebstoff getränkt ist, bleiben die Kugeln 33 auf dem Abschnitt 39 des Rovings 35 haften. Die Länge des Abschnitts 39 hängt von der Länge L der Bohrung 18 (siehe Figur 4) ab.

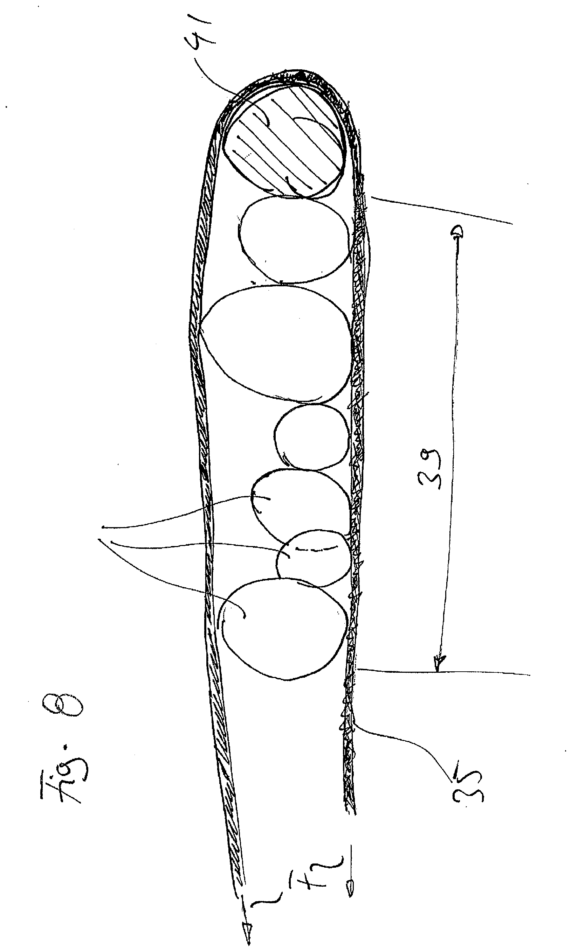

Anschließend wird der in Figur 7 rechte Teil des Rovings 35 um 180° gebogen und infolgedessen um die Kugeln 33 geschlungen. Damit die Biegung des Rovings 35 kontrolliert erfolgt, ist an den in Figur 8 rechten Ende des Abschnitts 9 ein Stützdraht 41 vorgesehen, um den der Roving 35 geführt wird. Dieser Stützdraht 41 wird später entfernt.

Wie aus der Figur 8 gut zu erkennen ist, sind nun die Kugeln 33 von dem Roving 35 umschlungen. Die spätere Belastungsrichtung des Rovings 35 ist in der Figur 8 durch Pfeile F angedeutet.

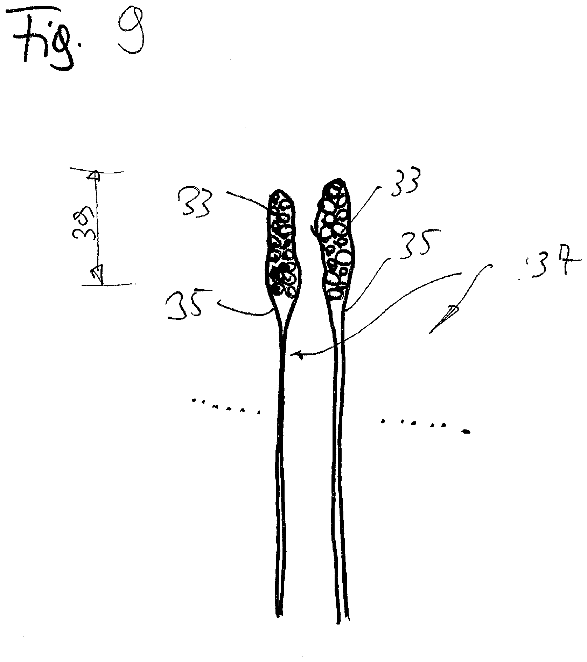

In der Figur 9 sind nun mehrere Faserstränge 37, die aus einem Roving 35 mit eingeschlossenen Kugeln 33 gemäß der Figur 8 bestehen, dargestellt. Aus der Figur 9 wird unmittelbar deutlich, dass die Faserstränge 37 wegen der "eingelagerten" Kugeln 33 an dem in Figur 9 oberen Ende etwas dicker sind als an dem unteren Teil. Diese Verdickung ist auf die Kugeln 33 zurückzuführen.

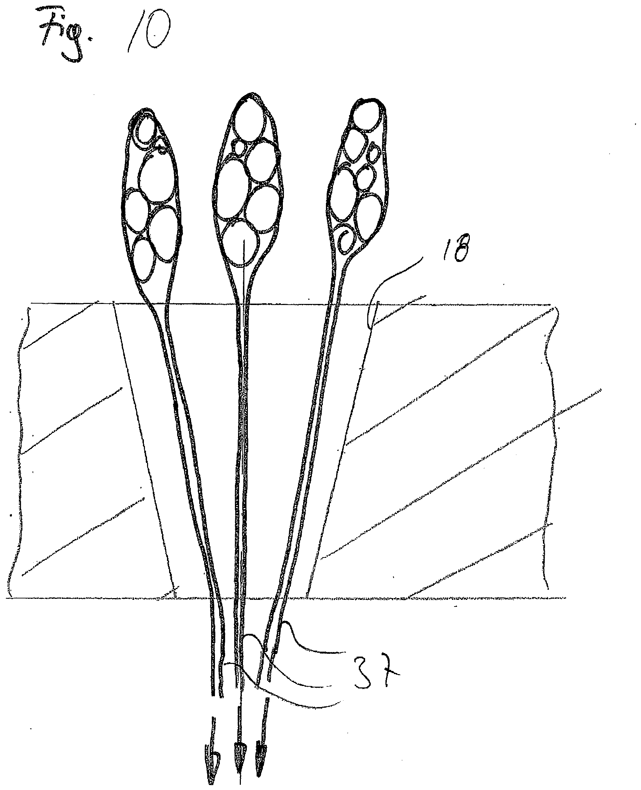

Wenn man nun eine Vielzahl solcher Faserstränge 37, beispielsweise 100 Stück oder mehr herstellt, und wie in der Figur 10 schematisch angedeutet, von oben in die Bohrung 18 hereinzieht, dann verkeilen sich die Faserstränge 37 beziehungsweise die in den Rovings 35 eingeschlossenen Kugeln 33 mit dem konischen Teil der Bohrung 18 und die Faserstränge 37 sind fest mit der zuvor beschriebenen Weise mit der Hülse 16 verbunden. Die Zahl der Rovings 35 beträgt in der Praxis 150 bis 600. Diese Zahl hängt unter anderem von der Zahl der Filamente pro Roving ab. In einer erfindungsgemäßen Faserstange befinden sich mehr als 200.000 Einzelfilamente, die wegen der erfindungsgemäßen Umlenkung doppelt wirksam sind.

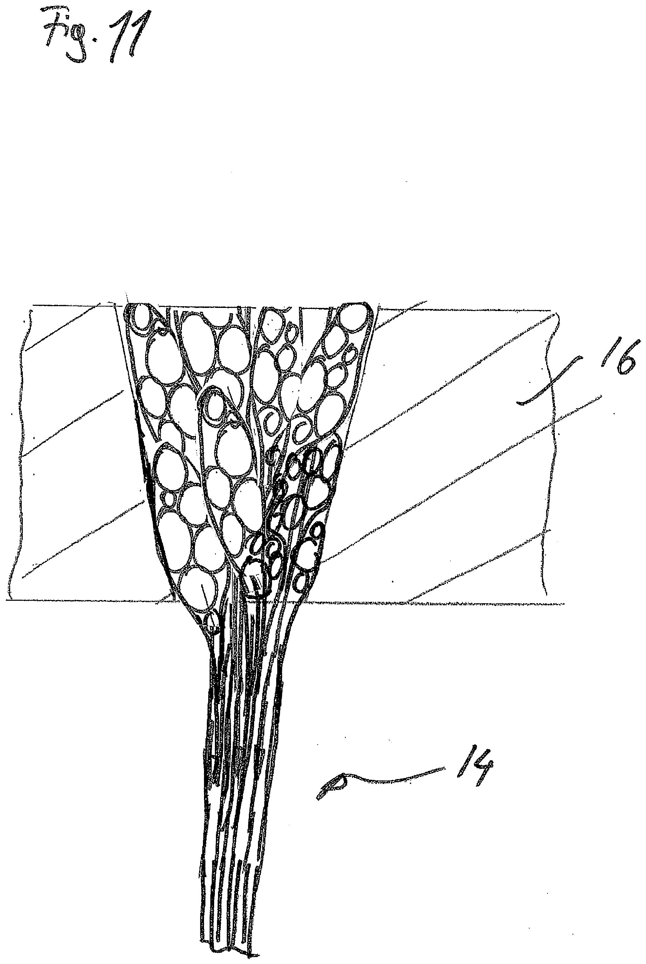

Diese Situation ist in der Figur 11 dargestellt. Dabei ist zu beachten, dass sich die Kugeln 33 der vielen Faserstränge gegenseitig abstützen und in dem konischen Teil der Bohrung 18 verkeilt sind.

Die Rovings 35 der Faserstränge 37 werden dabei in die vorhandenen Hohlräume beziehungsweise Zwischenräume zwischen den Kugeln 33 geschoben, so dass sie erstens nicht gequetscht werden und zweitens können die Rovings 35 nicht nach in der Figur 10 beziehungsweise 11 nach unten durch die Bohrung 18 hinaus rutschen. Daran hindern sie die Kugeln 33, die ja direkt miteinander in Kontakt stehen. Im Ergebnis ist dadurch eine sehr effektive und leistungsfähige formschlüssige Verbindung zwischen den Rovings 35 der Faserstränge 37 und der Hülse 16 hergestellt.

Anschließend werden nun die in der Figur 11 unteren Enden der Rovings zu einer homogenen Befestigungsstange 14 verbunden, indem sie beispielsweise durch ein Formwerkzeug in eine zylindrische Form gepresst werden. Weil, wie bereits erwähnt, die Rovings 35 mit einem Harz getränkt sind, verkleben die zusammengepressten unteren Enden der Faserstränge 37 miteinander zu einer Befestigungsstange 14 aus einem faserverstärkten Werkstoff.

Es ist an dieser Stelle noch darauf hinzuweisen, dass alle Figuren lediglich schematische Darstellung sind und wegen der Vielzahl der Kugeln 33, der Faserstränge und deren kleinen Abmessungen (von deutlich weniger als 1 mm), eine maßstabsgetreue Wiedergabe nicht möglich ist.

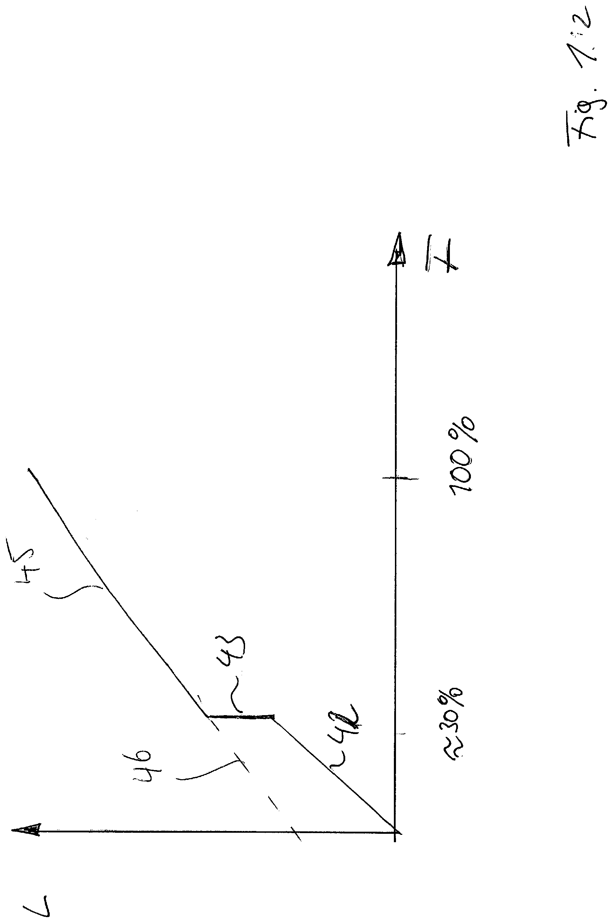

Ein weiterer sehr wichtiger Vorteil der erfindungsgemäßen Verbindung ist darin zu sehen, dass bei einer Überlastung die Befestigungsstange 14 nicht schlagartig aus der Hülse 16 rutscht, sondern die Kugeln 33 etwas weiter in die Bohrung 18 rutschen und sich dann wieder verkeilen. In der Figur 12 ist dieser Zusammenhang in Form eines Diagramms erläutert. Auf der X-Achse ist die Kraft F aufgetragen, während auf der Y-Achse die Länge L des Befestigungselements beziehungsweise eines erfindungsgemäßen Spannankers dargestellt ist.

Auf der X-Achse ist die auf das Befestigungselement beziehungsweise den Spannanker wirkende Kraft in Prozent der zulässigen Maximalkraft aufgetragen. Auf der Y-Achse ist die Länge L qualitativ dargestellt.

Wenn man eine erfindungsgemäße Befestigungsstange an einem Ende einspannt, zum Beispiel dort wo die Hülse angeordnet ist, und an dem anderen Ende der Befestigungsstange eine Zugkraft F einleitet, dann nimmt mit steigender Kraft F auch die Länge L etwa linear zu. Dieser erste Abschnitt ist in der Figur 12 mit dem Bezugszeichen 42 gekennzeichnet. Dieser erste Abschnitt 42, der eine Ursprungsgerade darstellt, endet bei einer Kraft F von ungefähr 30% der maximal zulässigen Kraft. Danach beginnt ein Setz-Vorgang.

Dieser Vorgang ist dadurch gekennzeichnet, dass bei gleichbleibender Kraft F die Länge L etwas zunimmt. Dieser Abschnitt ist mit dem Bezugszeichen 43 gekennzeichnet. Der Setzvorgang findet im Wesentlichen zwischen den Kugeln 33 oder Körnern und der Hülse 16 statt.

Durch diesen Setzvorgang wird eine noch besser formschlüssige Verbindung zwischen den Körnern beziehungsweise den Kugeln untereinander, aber auch zwischen den Kugeln und Körner sowie der konischen Bohrung im Innern der Hülse geschaffen. Wenn der Setzvorgang abgeschlossen ist, dann nimmt die Länge der Befestigungsstange mit zunehmender Kraft F wieder linear zu, was durch den dritten Abschnitt 45 angedeutet ist.

Dieser Setzvorgang wird vorteilhafterweise während der Herstellung der erfindungsgemäßen Befestigungsstangen und Spannanker nach dem Aushärten des Harzes durchgeführt, so dass die "vorgestreckten" Befestigungsstangen und Spannanker mit der Montage am Einsatzort gleich auf die endgültige Spannung gebracht werden können, ohne dass ein solcher Setzvorgang (nochmals) auftritt. Diese ist durch die gestrichelte Linie 46 in Figur 12 angedeutet.

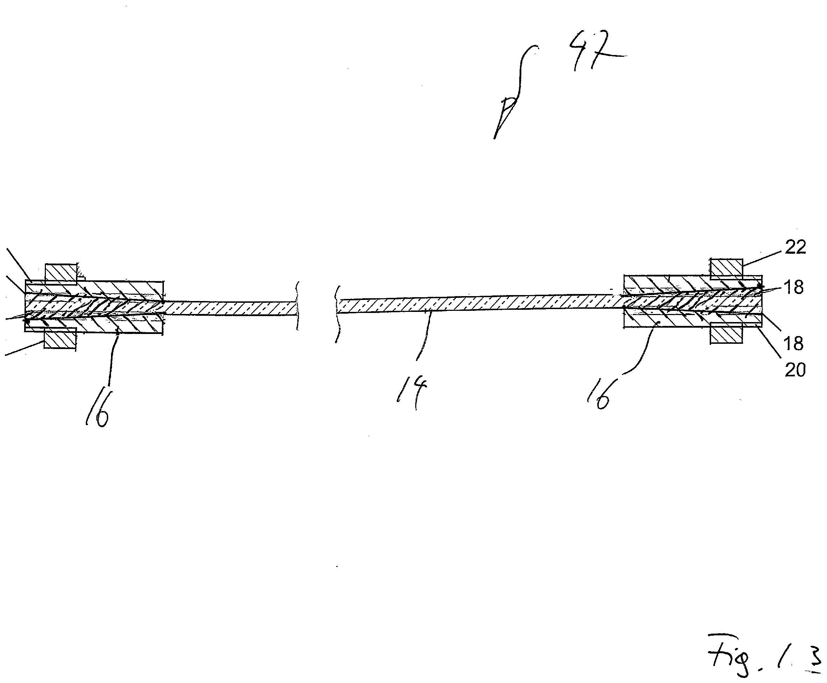

In der Figur 13 ist ein Ausführungsbeispiel eines erfindungsgemäßen Spannankers 47 geschnitten dargestellt. Es hat die Struktur einer Befestigungsstange mit dem Unterschied, dass an beiden Enden der Befestigungsstange 14 eine Hülse 16 formschlüssig mit der Befestigungsstange 14 verbunden ist. Die Befestigung zwischen den Hülsen 16 und den Enden der Befestigungsstange 14 erfolgt wie im Zusammenhang mit den Figuren 1 bis 11 erläutert.

Die Herstellung eines solchen Spannankers umfasst folgende Schritte:
Zunächst werden die Faserstränge gewickelt (Wickel). Anschließend werden die Faserstränge 37 durch zwei Gewindehülsen 16 gezogen, welche 180 Grad zu einander verdreht sind. Dieses Durchziehen erfolgt nur solange, bis die Faserstränge 37 aus der zweiten Gewindehülse 16 etwas herausragen. Danach wird die zweite Gewindehülse 16 mit Sand gefüllt und das Harz wird verfestigt. Im Anschluss daran wird die erste Gewindehülse an den Fasersträngen entlang bis an deren Ende verschoben und dieses Ende mit Sand gefüllt und das noch flüssige Harz wird verfestigt.

Um ein Aufschieben der Enden der Faserstränge 37 zu verhindern wird der Wickel so geschnitten, dass beide Enden unter der oder in der gleichen Hülse, in diesem Beispiel unter der zweiten Gewindehülse, enden um ein Aufschieben zu verhindern.

## Patentansprüche

1. Befestigungsstange (14, 47) zum Befestigen von Anbauteilen (12), wobei die Befestigungsstange (14) aus einem endlosfaserverstärkten Verbundwerkstoff besteht und an mindestens einem Ende der Befestigungsstange (14) eine metallische Hülse (16) mit der Befestigungsstange (14) formschlüssig verbunden ist, **dadurch gekennzeichnet, dass** die Befestigungsstange (14) von einer Vielzahl von FaserSträngen (37) gebildet wird, dass jeder Faser-Strang (37) aus vielen einzelnen Rovings (35) besteht, dass jedes Roving (35) an einem Ende des Faser-Strangs (37) um eine oder mehrere Kugeln (33) oder Körner aus einem druckfesten Material geschlungen ist, dass die Hülse (16) eine mindestens bereichsweise konische Bohrung (18) aufweist, und dass die von den Fasersträngen (37) umschlungenen Kugeln (33) oder Körner in dem konischen Teil der Bohrung (18) verkeilt sind.

2. Befestigungsstange nach Anspruch 1, **dadurch gekennzeichnet, dass** an beiden Enden eine metallische Hülse (16) formschlüssig mit der Befestigungsstange formschlüssig verbunden ist.

3. Befestigungsstange nach Anspruch 2, **dadurch gekennzeichnet, dass** sie als Spannanker (47), insbesondere an Bauwerken aus Beton oder druckbelasteten Hohlkörpern verwendet wird.

4. Befestigungsstange (14, 47) nach einem der vorhergehenden Ansprüche, **dadurch gekennzeichnet, dass** der Durchmesser (D) mindestens einer Kugel (33) oder eines Korns mindestens dreimal größer, bevorzugt fünfmal größer als der Durchmesser (DR) der Rovings (35) ist.

5. Befestigungsstange (14, 47) nach einem der vorhergehenden Ansprüche, **dadurch gekennzeichnet, dass** die Kugeln (33) oder Körner aus Glas, Keramik, Metall, Sand, insbesondere Quarzsand, oder einem anderen Material mit hoher Druckfestigkeit sind.

6. Befestigungsstange (14, 47) nach einem der vorhergehenden Ansprüche, **dadurch gekennzeichnet, dass** die Rovings (35) Fasern aus Basalt, Glas und/oder Kohlenstoff enthalten.

7. Befestigungsstange (14, 47) nach einem der vorhergehenden Ansprüche, **dadurch gekennzeichnet, dass** die Rovings (35) einen Durchmesser (DR) von mehr als 8 µm, bevorzugt zwischen 13 µm und 20 µm, haben.

8. Befestigungsstange (14, 47) nach einem der vorhergehenden Ansprüche, **dadurch gekennzeichnet, dass** die Faser-Stränge (37) mit den Kugeln (33) oder Körnern und/oder untereinander durch ein Harz oder ein anorganisches Material verbunden sind.

9. Befestigungsstange (14, 47) nach einem der vorhergehenden Ansprüche, **dadurch gekennzeichnet, dass** die Hülse(n) (16) ein Außengewinde (20) und/oder ein Innengewinde umfassen.

10. Befestigungsstange (14, 47) nach einem der vorhergehenden Ansprüche, **dadurch gekennzeichnet, dass** die Befestigungsstange (14) mindesten eine Nut aufweist.

11. Befestigungssystem zum Befestigen von Anbauteilen (12) an einem Mauerwerk oder einer Betonwand (10), wobei das Befestigungssystem eine Befestigungsstange (14) nach einem der vorhergehenden Ansprüche und eine Gewindemutter (22) oder eine Schraube umfasst.

12. Befestigungssystem nach Anspruch 11, **dadurch gekennzeichnet, dass** es mindestens eine Klemmscheibe aufweist, und/oder eine Unterlegscheibe, bevorzugt eine als Sperrzahnscheibe ausgebildete Unterlegscheibe, umfasst.

13. Verfahren zum Befestigen von Anbauteilen (12) an einem Mauerwerk oder einer Betonwand (10), **dadurch gekennzeichnet, dass** bei der Anwendung des Verfahrens ein Befestigungssystem gemäß Anspruch 11 oder 12 verwendet wird und das Verfahren folgende Verfahrensschritte umfasst:
- Bohren eines Bohrlochs (26) in ein Mauerwerk oder eine Betonwand (10);
- Einführen einer Befestigungsstange (14) in das Bohrloch (26) und
- Verkleben der Befestigungsstange (14) im Bohrloch (26) mit einem Klebstoff;
- Verschrauben des Anbauteils (12) mit Hilfe eines Außen- (20) oder Innengewindes der metallischen Hülse (16) nach dem Aushärten des Klebstoffs.

14. Verfahren nach Anspruch 13, **dadurch gekennzeichnet, dass** ein Teil des Bohrlochs (26) mit Kleber und ein Teil des Bohrlochs (26) mit einem druckfesten Material, vorzugsweise mit Beton, aufgefüllt werden.

15. Verfahren nach Anspruch 14, **dadurch gekennzeichnet, dass** das druckfeste Material auch einen Teil des Durchgangslochs (28) in dem Anbauteil (12) ausfüllt.

16. Verfahren nach einem der Ansprüche 13 bis 15, **dadurch gekennzeichnet, dass** ein rohrförmig ausgebildetes Befestigungselement (14) mit druckfestem Material gefüllt wird.

17. Verfahren nach einem der Ansprüche 13 bis 16, **dadurch gekennzeichnet, dass** als Klebstoff ein unter UV-Licht aushärtender Klebstoff eingesetzt wird, und dass nach dem Setzen der Befestigungsstange (14) durch deren Fasern UV-Licht in den im Bohrloch (26) befindlichen Klebstoff eingekoppelt wird.

## Claims

1. A fastening rod (14, 47) for the purpose of fastening attachments (12), the fastening rod (14) consisting of a composite material reinforced with endless fiber, and a metal sheath (16) being joined form-fittingly to the fastening rod (14) on at least one end of the fastening rod (14), **characterized in that** the fastening rod (14) is formed by a plurality of fiber strands (37); that each fiber strand (37) comprises many individual rovings (35); that each roving (35), on one end of the fiber strand (37), is wound around one or more balls (33) or granules of a pressure-resistant material; that the sheath (16) has a bore (18) that is conical in at least some areas; and that the balls (33) or granules around which the fiber strands (37) are wound are wedged in the conical part of the bore (18).

2. The fastening rod of claim 1, **characterized in that** a metal sheath (16) is joined on both ends form-fittingly to the fastening rod.

3. The fastening rod of claim 2, **characterized in that** it is used as a tensioning anchor (47), in particular on construction projects made of concrete or pressure-loaded hollow bodies.

4. The fastening rod (14, 47) of one of the foregoing claims, **characterized in that** the diameter (D) of at least one ball (33) or granule is at least three times greater, preferably five times greater, than the diameter (DR) of the rovings (35).

5. The fastening rod (14, 47) of one of the foregoing claims, **characterized in that** the balls (33) or granules are of glass, ceramic, metal, sand, in particular quartz sand, or some other material with high pressure resistance.

6. The fastening rod (14, 47) of one of the foregoing claims, **characterized in that** the rovings (35) contain fibers of basalt, glass, and/or carbon.

7. The fastening rod (14, 47) of one of the foregoing claims, **characterized in that** the rovings (35) have a diameter (DR) of more than 8 µm, preferably between 13 µm and 20 µm.

8. The fastening rod (14, 47) of one of the foregoing claims, **characterized in that** the fiber strands (37) are joined to the balls (33) or granules and/or to one another by a resin or an inorganic material.

9. The fastening rod (14, 47) of one of the foregoing claims, **characterized in that** the sheath or sheaths (16) include a male thread (20) and/or a female thread.

10. The fastening rod (14, 47) of one of the foregoing claims, **characterized in that** the fastening rod (14) has at least one groove.

11. A fastening system for the purpose of fastening attachments (12) to a piece of masonry or a concrete wall (10), wherein the fastening system includes a fastening rod (14) of one of the foregoing claims and a threaded nut (22) or a screw.

12. The fastening system of claim 11, **characterized in that** it has at least one clamping disk and/or a shim, preferably a shim embodied as a ratchet disk.

13. A method for the purpose of fastening attachments (12) to a piece of masonry or a concrete wall (10), **characterized in that** in the application of the method, a fastening system of claim 11 or 12 is used, and the method includes the following method steps:
- drilling a borehole (26) into a piece of masonry or a concrete wall (10);
- introducing a fastening rod (14) into the borehole (26); and
- gluing the fastening rod (14) in the borehole (26) with an adhesive;
- screwing the attachment (12) with the aid of a male thread (20) or female thread of the metal sheath (16) after the adhesive has hardened.

14. The method of claim 13, **characterized in that** one part of the borehole (26) is filled with adhesive, and one part of the borehole (26) is filled with a pressure-resistant material, preferably concrete.

15. The method of claim 14, **characterized in that** the pressure-resistant material also fills one part of the through hole (28) in the attachment (12).

16. The method of one of claims 13 through 15, **characterized in that** a tubular fastening rod (14) is filled with pressure-resistant material.

17. The method of one of claims 13 through 16, **characterized in that** as the adhesive, an adhesive that hardens under UV light is used; and that after the seating of the fastening rod (14), UV light is fed through its fibers into the adhesive located in the borehole (26).

## Revendications

1. Barre de fixation (14, 47) pour la fixation de pièces rapportées (12), la barre de fixation (14) étant constituée d'un matériau composite renforcé par des fibres continues et un manchon métallique (16) étant relié par coopération de formes à la barre de fixation (14) par au moins une extrémité de la barre de fixation (14), **caractérisée en ce que** la barre de fixation (14) est formée par une pluralité de faisceaux de fibres (37), **en ce que** chaque faisceau de fibres (37) est constitué d'un grand nombre de mèches de fibres (35) individuelles, **en ce que** chaque mèche de fibres (35) est enroulée à une extrémité du faisceau de fibres (37) autour d'un(e) ou de plusieurs billes ou grains fait(e)s d'un matériau résistant à la pression, **en ce que** le manchon (16) présente un trou (18) au moins en partie conique, et **en ce que** les billes (33) ou coins autour desquel(le)s les faisceaux de fibres (37) sont enroulés sont calé(e)s dans la partie conique du trou (18).

2. Barre de fixation selon la revendication 1, **caractérisée en ce qu'**aux deux extrémités, un manchon métallique (16) est relié par coopération de formes à la barre de fixation.

3. Barre de fixation selon la revendication 2, **caractérisée en ce qu'**elle est utilisée comme un ancrage de serrage (47), en particulier sur des ouvrages en béton ou des corps creux soumis à une charge de pression.

4. Barre de fixation (14, 47) selon l'une quelconque des revendications précédentes, **caractérisée en ce que** le diamètre (D) d'au moins une bille (33) ou d'un grain est au moins trois fois plus grand, de préférence cinq fois plus grand que le diamètre (DR) des mèches de fibres (35) .

5. Barre de fixation (14, 47) selon l'une quelconque des revendications précédentes, **caractérisée en ce que** les billes (33) ou les grains sont faits de verre, de céramique, de métal, de sable, en particulier de sable siliceux, ou d'un autre matériau présentant une résistance élevée à la pression.

6. Barre de fixation (14, 47) selon l'une quelconque des revendications précédentes, **caractérisée en ce que** les mèches de fibres (35) contiennent des fibres de basalte, de verre et/ou de carbone.

7. Barre de fixation (14, 47) selon l'une quelconque des revendications précédentes, **caractérisée en ce que** les mèches de fibres (35) présentent un diamètre (DR) supérieur à 8 µm, de préférence compris entre 13 µm et 20 µm.

8. Barre de fixation (14, 47) selon l'une quelconque des revendications précédentes, **caractérisée en ce que** les faisceaux de fibres (37) sont reliés aux billes (33) ou aux grains et/ou les uns aux autres par une résine ou un matériau anorganique.

9. Barre de fixation (14, 47) selon l'une quelconque des revendications précédentes, **caractérisée en ce que** le(s) manchons(s) (16) comportent un filet extérieur (20) et/ou un filet intérieur.

10. Barre de fixation (14, 47) selon l'une quelconque des revendications précédentes, **caractérisée en ce que** la barre de fixation (14) présente au moins une rainure.

11. Système de fixation pour la fixation de pièces rapportées (12) à une maçonnerie ou à une paroi en béton (10), le système de fixation comportant une barre de fixation (14) selon l'une quelconque des revendications précédentes et un écrou fileté (22) ou une vis.

12. Système de fixation selon la revendication 11, **caractérisé en ce qu'**il comporte au moins une rondelle de serrage, et/ou une rondelle, de préférence une rondelle réalisée sous la forme d'une rondelle à dents de blocage.

13. Procédé de fixation de pièces rapportées (12) à une maçonnerie ou à une paroi en béton (10), **caractérisé en ce que**, lors de l'application du procédé, un système de fixation selon la revendication 11 ou 12 est utilisé et le procédé comprend les étapes de procédé suivantes:
- le forage d'un trou foré (26) dans une maçonnerie ou une paroi en béton (10);
- l'introduction d'une barre de fixation (14) dans le trou foré (26) et
- le collage de la barre de fixation (14) dans le trou foré (26) au moyen d'un adhésif;
- le vissage de la pièce rapportée (12) à l'aide d'un filet extérieur (20) ou intérieur du manchon métallique (16) une fois l'adhésif durci.

14. Procédé selon la revendication 13, **caractérisé en ce qu'**une partie du trou foré (26) est remplie de colle et une partie du trou foré (26) est remplie d'un matériau résistant à la pression, de préférence de béton.

15. Procédé selon la revendication 14, **caractérisé en ce que** le matériau résistant à la pression remplit également une partie du trou foré (28) dans la pièce rapportée (12).

16. Procédé selon l'une quelconque des revendications 13 à 15, **caractérisé en ce qu'**un élément de fixation (14) tubulaire est rempli de matériau résistant à la pression.

17. Procédé selon l'une quelconque des revendications 13 à 16, **caractérisé en ce qu'**un adhésif durcissant à la lumière ultraviolette est utilisé comme adhésif, et **en ce que**, une fois la barre de fixation (14) mise en place, une lumière ultraviolette est injectée à travers les fibres de celle-ci dans l'adhésif situé dans le trou foré (26) .
